(19) Europäisches Patentamt
European Patent Office
Office européen des brevets

(11) **EP 1 564 862 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**05.10.2016 Patentblatt 2016/40**

(45) Hinweis auf die Patenterteilung:
**26.09.2007 Patentblatt 2007/39**

(21) Anmeldenummer: **04003412.6**

(22) Anmeldetag: **16.02.2004**

(51) Int Cl.:
***H02J 7/34*** *(2006.01)*

(54) **Kraftfahrzeug-Bordnetz mit einem Spannungswandler**

Vehicle power grid having a voltage converter

Réseau de bord d'un véhicule avec un transformateur de tension

(84) Benannte Vertragsstaaten:
**DE ES FR IT SE**

(43) Veröffentlichungstag der Anmeldung:
**17.08.2005 Patentblatt 2005/33**

(73) Patentinhaber: **catem DEVELEC GmbH**
**76863 Herxheim (DE)**

(72) Erfinder: **Uhl, Günter, Dr.-Ing.**
**74921 Helmstadt-Bargen (DE)**

(74) Vertreter: **Grünecker Patent- und Rechtsanwälte**
**PartG mbB**
**Leopoldstraße 4**
**80802 München (DE)**

(56) Entgegenhaltungen:
**EP-A- 1 253 698      WO-A-02/066293**
**DE-A- 19 709 298     US-B1- 6 325 035**
**US-B2- 6 481 406**

EP 1 564 862 B2

**Beschreibung**

Die Erfindung betrifft ein verbessertes Kraftfahrzeug-Bordnetz. Insbesondere betrifft die Erfindung ein neuartiges Kraftfahrzeug-Bordnetz, das einen zuverlässigeren Motorstart ermöglicht.

Ein Kraftfahrzeugbordnetz versorgt eine Vielzahl von Steuergeräten und Signalkomponenten in einem Kraftfahrzeug mit Strom. Der Strom wird entweder einer Batterie als Energiespeicher oder, beim Betrieb des Kraftfahrzeugmotors, einem Generator entnommen. Über Relais oder einen elektronischen Stromverteiler mit Halbleiterschaltern kann eine Vielzahl einzelner Anwendungen über individuelle Laststromkreise mit Strom aus dem Kraftfahrzeug-Bordnetz versorgt werden.

Herkömmliche Bordnetze mit einer Spannung von 14 V basieren auf einer Batteriespannung von 12 Volt. Zukünftige Bordnetze sind mit einer 36 Volt-Batterie ausgestattet. Für eine Übergangszeit, in der eine Umstellung von einem 14 Volt auf ein 42 Volt-System stattfindet, werden beide Systeme parallel in einem Kraftfahrzeug eingesetzt.

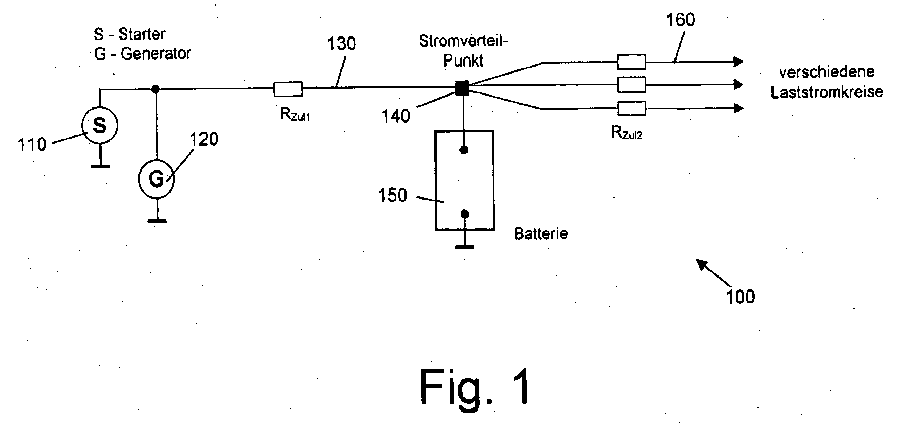

Eine schematische Darstellung eines konventionell aufgebauten Kraftfahrzeug-Bordnetzes ist in Fig. 1 dargestellt. In dem abgebildeten Bordnetz 100 sind ein Generator 120, eine Batterie 150 und ein Starter 110 parallel geschaltet. Im Allgemeinen beträgt die Leitungslänge 130 zwischen dem Generator 120 und dem Starter 110 einerseits und der Batterie 150 andererseits jeweils etwa 1 m. Dabei sind Starter und Generator am Motorblock angeordnet und jeweils über ein kurzes Kabel miteinander verbunden. Aufgrund von Schwankungen des vom Generator bereitgestellten Stroms und zur Übertragung des Starterstroms beträgt der Leitungsquerschnitt in etwa 25 mm$^2$.

Über einen herkömmlichen Stromverteilpunkt oder Stromverteiler 140 wird der Strom verschiedenen Laststromkreisen 160 im Bordnetz des Kraftfahrzeugs zugeführt. Jeder Laststromkreis 160 versorgt einen oder mehrere Verbraucher mit Strom. Bei einer Leitungslänge eines Laststromkreises von etwa 1 m können diese Leitungen einen geringeren Querschnitt als die Leitung 130 aufweisen, und zwar von ca. 5 mm$^2$.

Während der Starter 110 eine sehr hohe Stromaufnahme von bis zu 300A, kurzzeitig sogar bis zu 600A, aufweist, ist die Stromaufnahme aller anderen Verbraucher im Kraftfahrzeug-Bordnetz deutlich geringer. Typische Stromwerte von Verbrauchern im Kraftfahrzeug-Bordnetz reichen von etwa 1,5 A für Standlicht aller Leuchten, 3 A für das Bremslicht und Blinklicht, 8 A für den Scheibenwischer und 8,5 A für Nebel- und Fernscheinwerfer über 10 A für Abblendlicht und das Innenraumgebläse einer Klimaanlage, 18 A für die Motorsteuerung mit Kraftstoffpumpe und 20 A für die Sitzheizung bis hin zu einem elektrischen PTC-Zuheizer mit einer Stromaufnahme im Bereich von etwa 100 A.

Alle Lastkreise 160 sind durch eine Überstromschutzeinrichtung gegen einen Kurzschluss gesichert, so dass die Stromzufuhr zu dem jeweiligen Laststromkreis unterbrochen wird, sobald ein Kurzschluss auftritt. Dadurch wird eine thermische Überhitzung der Kabel- und Steckverbinder in dem jeweiligen Lastkreis verhindert.

WO-A 02/066293 beschreibt ein Zweispannungsbordnetz mit einer 14 Volt-Batterie und einer 42 Volt-Batterie. Ein Doppelschichtkondensator dient in dem Bordnetz als Hauptenergiespeicher. Zur Entkopplung von Kondensator und Batterie wird gemäß einer Ausführungsform ein Gleichspannungswandler zwischen 42 Volt-Batterie und Doppelschichtkondensator geschaltet. Um einen solchen Gleichspannungswandler zu vermeiden, wird gemäß einer anderen Ausführungsform der Doppelschichtkondensator so von der 42 Volt-Batterie entkoppelt, dass entweder nur der Doppelschichtkondensator oder die Batterie mit dem Bordnetz verbunden sind. Zu diesem Zweck ist eine Schaltungsanordnung aus vier Schaltern vorgesehen.

Aus US-B-6 325 035 ist ein Bordnetz zum Starten eines Verbrennungsmotors bekannt. Die Energie aus einer Batterie mit niedriger Spannung wird über einen Gleichspannungswandler auf eine Spannung von über 100 Volt umgewandelt. Mit der hohen Spannung wird ein Kondenstor hoher Kapazität aufgeladen.

US-B- 6 481 406 beschreibt ein Starterbordnetz für ein Kraftfahrzeug. Die Spannung einer Starterbatterie wird über einen Up-Converter von einer Spannung zwischen 12 und 24 Volt auf eine höhere Spannung umgewandelt.

Aufgabe der Erfindung ist es, ein verbessertes Kraftfahrzeug-Bordnetz und ein verbessertes Verfahren zum Starten eines Kraftfahrzeugmotors anzugeben.

Diese Aufgabe wird mit den Merkmalen der unabhängigen Patentansprüche gelöst.

Die Aktivierung des Spannungswandlers und die Öffnung des Unterbrechers wird erfindungsgemäß von einer Steuereinheit kontrolliert. Mit Erfassung eines bevorstehenden Startvorgangs können der Spannungswandler und der Unterbrecher entsprechend angesteuert werden. Der Ladevorgang des Kondensators wird auf diese Weise eine kurze Zeit vor Beginn des Startvorgangs durchgeführt.

Es ist der besondere Ansatz der vorliegenden Erfindung, die Startenergie zum Inbetriebsetzen des Kraftfahrzeugmotors nicht direkt aus der Batterie, sondern aus einem Kondensator hoher Kapazität bereitzustellen. Um die in dem Kondensator gespeicherte Energie für den Startvorgang zu erhöhen, ohne die Kapazität des Kondensators zu erhöhen, wird erfindungsgemäß der Kondensator auf eine höhere Spannung aufgeladen. Zu diesem Zweck wird die Batteriespannung über einen Spannungswandler nur während des Aufladevorgangs in eine höhere Spannung umgesetzt und dem Kondensator zugeführt.

Auf diese Weise lassen sich die für den Startvorgang zur Verfügung stehenden Energiereserven in einfacher Weise erhöhen. Auch bei einer "schwachen" Batterie kann das Fahrzeug sicher gestartet werden. Alternativ lässt sich die Kapazität des Kondensators entsprechend reduzieren, so dass der Kondensator bei gleicher gespeicherter Energiemenge eine geringere Kapazität aufweisen kann.

Vorzugsweise erhöht der Spannungswandler die Batteriespannung von etwa 12,5 V auf etwa 16 V. Mit dieser Spannungserhöhung lässt sich die in dem Kondensator gespeicherte Energiemenge um ca. 60% erhöhen. Eine Erhöhung auf 16 V hat weiterhin den Vorteil, dass eine Erhöhung der Spannung im Bordnetz um diesen Betrag keine Probleme bei anderen elektrischen Komponenten des Bordnetzes nach sich zieht. Eine weitere Erhöhung der Spannung dagegen könnte die Betriebssicherheit anderer Komponenten des Bordnetzes beeinträchtigen.

Zur Erfassung eines kurz bevorstehenden Startvorgangs wird der geöffnete Zustand einer Fahrzeugtür bei stehendem Motor erfasst, vorzugsweise der Offen/Geschlossen-Zustand der Fahrertür. Damit bleibt ausreichend Zeit, um den Kondensator aufzuladen, auch bei einer schwachen Batterie, und einen sicheren Startvorgang zu ermöglichen.

Gemäß einer anderen bevorzugten Ausführungsform wird der Aufladevorgang des Kondensators in Abhängigkeit von der Stellung des Zündschlüssels durchgeführt. Vorzugsweise entweder durch Einstecken des Zündschlüssels in das Zündschloss oder bei der Stellung des Zündschlüssels "Zündung EIN".

Vorzugsweise wird der Unterbrecher erst dann geschlossen, wenn der Motor erfolgreich gestartet wurde oder der Generator Strom erzeugt. Dazu wird vorzugsweise die Spannung des Generators überwacht und der Unterbrecher in Abhängigkeit von der Höhe der Generatorspannung geschlossen, beispielsweise bei Erreichen eines bestimmten Spannungswertes. Damit lässt sich in einfacher Weise ein sicheres Starten des Motors feststellen und der Startvorgang beenden.

Weitere vorteilhafte Ausgestaltungen sind Gegenstand der Unteransprüche.

Im Folgenden wird die vorliegende Erfindung anhand bevorzugter Ausführungsformen im Zusammenhang mit den beiliegenden Zeichnungen erläutert. Dabei zeigen die Zeichnungen im Einzelnen:

Fig. 1    den Aufbau eines herkömmlichen Kraftfahrzeug-Bordnetzes;

Fig. 2    den Aufbau eines erfindungsgemäßen Kraftfahrzeug-Bordnetzes;

Fig. 3    einen detaillierten Aufbau eines erfindungsgemäßen Kraftfahrzeug-Bordnetzes gemäß der vorliegenden Erfindung und

Fig. 4    eine elektrische Ersatzschaltung für eine herkömmliche Autobatterie.

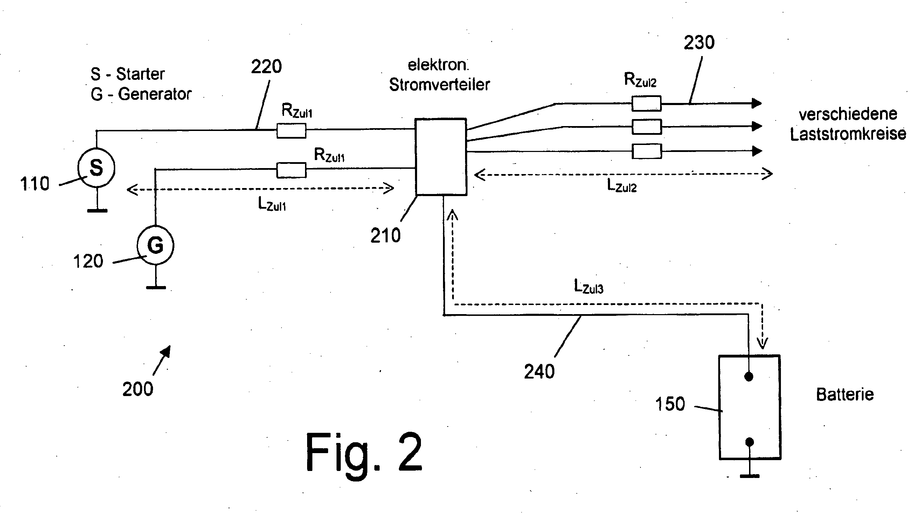

Fig. 2 zeigt in schematischer Weise den Aufbau eines erfindungsgemäßen Kraftfahrzeug-Bordnetzes. Ein Starter 110 und ein Generator 120 sind über separate Zuleitungen 120 mit einem elektronischen Stromverteiler 210 verbunden. Mit dem elektronischen Stromverteiler ist ebenfalls eine Batterie 150 über eine Zuleitung 240 verbunden. Während der Generator 120 während des Betriebs des Kraftfahrzeugmotors elektrischen Strom dem Kraftfahrzeug-Bordnetz 200 bereitstellt, speichert die Batterie 150 während des Betriebs des Motors die von dem Generator 120 bereitgestellte Energie. Um den Motor in Betrieb zu setzen, wird über eine chemische Reaktion in der Batterie 150 elektrische Energie erzeugt und dem Starter 110 zugeführt.

Der Stromverteiler 210 schaltet steuerbar einzelne Laststromkreise 230 an das Kraftfahrzeug-Bordnetz.

Anders als bei herkömmlichen Kraftfahrzeug-Bordnetzen 100 kann die Batterie 150 in dem erfindungsgemäßen Bordnetz 200 beliebig im Kraftfahrzeug positioniert werden, ohne dass Leitungsverbindungen mit großen Leitungsquerschnitten verwendet werden müssen. Während bei einem herkömmlichen Bordnetz 100 gemäß Fig. 1 eine Zuleitung 130 mit einer Länge $L_{Zul1}$ von etwa 1 m einen Querschnitt von 25 mm$^2$ aufweist, weisen die erfindungsgemäßen Zuleitungen 220 bei gleicher Länge nur noch eine Querschnittsfläche von in etwa 5 mm$^2$ auf. Die von dem Stromverteilpunkt ausgehenden Last stromkreise weisen bei einer Länge $L_{Zul2}$ von etwa 1 m einen Querschnitt von 5 mm$^2$ auf.

Bei Anordnung der Batterie 150 in der Nähe des Stromverteilpunkts 140 im Motorraum weist auch die elektrische Verbindung der Batterie mit dem Stromverteilpunkt einen Querschnitt von etwa 5 mm$^2$ bei einer Länge $L_{Zul3}$ von maximal etwa 1 m auf.

Alternativ ist die Batterie mit dem Stromverteilpunkt im Heck eines Kraftfahrzeugs angeordnet. Bei dieser Anordnung sind in einem herkömmlichen Bordnetz 100 alle Verbindungsleitungen zu und von dem Stromverteilpunkt 140 bzw. der Batterie 150 erheblich länger. Gleichzeitig müssen die Leitungsquerschnitte erhöht werden, um bei größerer Leitungslänge mit einem entsprechend höheren Widerstand eine Wärmeentwicklung in den Leitungen zu vermeiden. Aus diesem Grund vergrößert sich herkömmlicher Weise der Querschnitt der Leitungen 130 bei einer Länge $L_{Zul1}$ von ca. 4 m auf ungefähr 95mm$^2$ und der Leitungsquerschnitt der Leitungen der Lastkreise 160 bei einer Länge $L_{Zul2}$ von bis etwa 5 m auf ungefähr 25 mm$^2$.

Erfindungsgemäß können diese Querschnitte erheblich vermindert werden. Zu diesem Zweck werden der elektronische Stromverteiler 210 und die Batterie 150 räumlich voneinander getrennt angeordnet. Gleichzeitig wird die von einer herkömmlichen Batterie ausgeübte Pufferfunktion zum Ausgleich von Spannungsschwankungen des Generators 120 in den elektronischen Stromverteiler 210 verlagert. Bei dieser Anordnung können alle Leitungen bei einer Länge von maximal etwa 1 m einen Querschnitt in der Größenordnung von 5 mm² aufweisen. Nur bei einer Anordnung der Batterie 150 im Heck eines Kraftfahrzeugs, wobei der elektronische Stromverteiler 210 im Motorraum des Kraftfahrzeugs belassen wird, ist eine längere Leitungsverbindung zwischen elektronischem Stromverteiler 210 und der Batterie 150 erforderlich. Bis zu einer Länge $L_{Zul3}$ von etwa von etwa 4 m beträgt der Leitungsquerschnitt etwa 25 mm².

Eine weitere Reduzierung der Leitungsquerschnitte ist in Abhängigkeit von der jeweiligen Anwendung dadurch möglich, dass erfindungsgemäß eine aktive Stromüberwachung zur Steuerung des Sicherungsverhaltens im Stromverteiler 210 durchgeführt wird. Die aktive Überwachung des in einen Lastkreis 230 fließenden Stromes erlaubt, bei einem bestimmten Zeitverhalten, insbesondere bei einer schnellen Zunahme über einen vorbestimmen Wert, den Lastkreis abzuschalten.

Im Gegensatz dazu wird der Querschnitt herkömmlicher Leitungen regelmäßig auf den doppelten Nennstrom ausgelegt, um kurze Stromspitzen im Lastkreis ohne thermische Überlastung der Leitungen verkraften zu können. Die erfindungsgemäße Stromüberwachung mit Hilfe einer mikroprozessorgesteuerten Steuereinheit erlaubt, den Überlastschutz exakter an kurzen Überlastspitzen und das Kurzschlussverhalten anzupassen. Damit kann in einfacher Weise der Querschnitt und damit das Gewicht und die Kosten des Kraftfahrzeug-Bordnetzes reduziert werden.

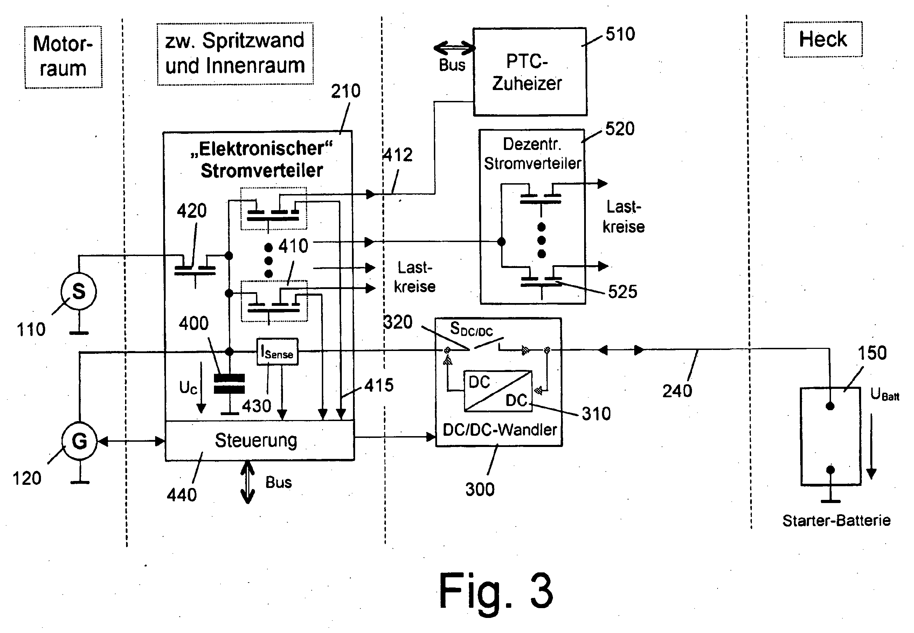

Weitere Details des erfindungsgemäßen Bordnetzes sind in Fig. 3 dargestellt. Bei der in Fig. 3 dargestellten Ausführungsform ist die Batterie 150 vorzugsweise im Heck des Fahrzeugs angeordnet.

Der elektronische Stromverteiler 210 enthält eine Mehrzahl von Halbleiterschaltern 410, die die einzelnen Lastkreise 412 steuerbar mit dem Kraftfahrzeug-Bordnetz verbinden, d.h. eine Stromzufuhr zu den einzelnen Lastkreisen zu- oder abschalten. Für solche Halbleiterschalter werden insbesondere Halbleiterschalter mit einer Smart-Power-Control verwendet. Ein solcher Halbleiterschalter, beispielsweise der Baustein 98 0268 der Firma "International I.R. Rectifier" misst den in den zugeschalteten Lastkreis fließenden Strom. Bei dem angegebenen Halbleiterbaustein wird ein dem gemessenen Strom proportionaler Strom über einen separaten Anschluss ausgegeben. Der von jedem Halbleiterschalter 410 gemessene Strom wird einer Steuerung 440 des elektronischen Stromverteilers zugeführt. Diese Steuerung, die entweder innerhalb des elektronischen Stromverteilers 210 oder separat davon angeordnet ist, überwacht für jeden Lastkreis individuell den zulässigen Strom.

Der für jeden Lastkreis zulässige Stromwert ist vorzugsweise für jeden Lastkreis 412 separat in der Steuerung 440 einstellbar. Gemäß einer bevorzugten Ausführungsform sind in der Steuerung 440 unterschiedliche Stromhöhen und unterschiedliche "Auslöse"-Charakteristika vorgesehen, die für jeden Lastkreis 412 separat auswählbar sind. Sobald der für einen Lastkreis 412 gemessene Strom den für ihn festgelegten Maximalwert unter Berücksichtigung eines zulässigen Überstroms überschreitet, veranlasst die Steuerung 440, dass der Halbleiterschalter 410 die elektrische Verbindung unterbricht.

Mit einem solchen Hableiterschalter ist ein reversibler Abschaltvorgang möglich, bei dem der Lastkreis ohne Austausch beispielsweise einer Schmelzsicherung wieder in Betrieb genommen werden kann. Außerdem ermöglicht die aktive Stromüberwachung ein schnelles Ansprechen im Kurzschussfall. Sehr hohe Kurzschlussströme fließen daher nur für wenige Millisekunden. Deshalb müssen die Leitungen und Steckverbinder des jeweiligen Lastkreises nicht auf einen Kurzschlussfall ausgelegt werden, bei dem für eine deutlich längere Zeit ein hoher Strom fließt.

Die "intelligente" Überwachung des jeweiligen Laststroms in der Steuerung 440 erlaubt, kurze Überströme zuzulassen, ohne dass die elektrische Verbindung zur Stromzuführung zu dem Lastkreis unterbrochen wird. Das Ansprechverhalten kann dadurch individuell gestaltet werden, insbesondere an die Funktion und den Strombedarf (und kurzzeitigen Überstrombedarf) des jeweiligen Lastkreises angepasst werden. Dabei müssen kurze Überströme beim Anlauf eines Motors oder beim Einschalten von Lampen, Zuheizem usw. berücksichtigt werden.

Die Schutzfunktion soll verhindern, dass Überströme bzw. Kurzschlüsse in den Laststromkreisen auftreten und zu einer thermischen Überlastung der Leitungen und Steckverbinder führen. Die thermische Überlastung wird durch die umgesetzte Energie bewirkt, d.h. Stromhöhe multipliziert mit der Zeit, für die der Überstrom anliegt. Es kann durchaus zulässig sein, für eine Sekunde den zehnfachen Nennstrom in einen Lastkreis fließen zu lassen, ohne dass eine Beschädigung auftritt. Ein solcher Überstrom muss von der Steuerung 440 als unproblematisch erkannt werden. Eine Schmelzsicherung dagegen würde bei einem solchen Überstrom eine Unterbrechung herbeiführen und den Strom irreversibel (bis zum Austausch der Sicherung) unterbrechen.

Kurzzeitige Überströme mit einem mehrfachen Wert des Nennstroms treten beispielsweise beim Einschalten eines Elektromotors auf. Beim Anfahren eines Elektromotors kann der Rotor anfänglich etwas schwergängig sein oder klemmen, insbesondere bei tiefen Umgebungstemperaturen. Ein Überstrom, der einem Mehrfachen des Nennstroms entspricht, tritt für einige 100 ms auf. Auch bei elektrischen PTC-Zuheizern, die zur Erwärmung der in den Kraftfahrzeuginnenraum geblasenen Luft verwendet werden, können beim Einschalten innerhalb eines Zeitintervalls von ca. 10 Sekunden Ströme auftreten, die dem Doppelten des Nennstroms entsprechen. Aufgrund des extrem kurzzeitigen Auftretens solcher Überströme sind diese für die Leitungen und Steckverbinder unproblematisch.

Eine herkömmliche Schmelzsicherung ist in der Regel auf einen Ansprechstrom eingestellt, der größer als das Doppelte des Nennstroms ist. Eine solche herkömmliche Sicherung würde aber auch einen dauernden Überstrom akzeptieren, der dem 1,8-fachen des Nennstroms entspricht. Im Gegensatz dazu kann eine elektronische Absicherung gemäß der vorliegenden Erfindung einen derartigen Überstrom erkennen und nach Überschreiten des Zeitkriteriums, beispielsweise 10 Sekunden, die elektrische Verbindung unterbrechen. Der jeweilige Laststromkreis kann daher in seiner Dimensionierung auf den tatsächlichen Nennstrom ausgelegt werden, so dass die Leitungsquerschnitte und der Steckverbinder nicht auf Dauer den doppelten Nennstrom aushalten können müssen.

Die erfindungsgemäße Steuerung 440 lässt sich auch mit Hilfe eines zusätzlichen Temperatursensors an die aktuelle Umgebungstemperatur anpassen. Bei niedrigen Umgebungstemperaturen können aufgrund der verbesserten Kühlung höhere Ströme zugelassen werden. Die Überstromerkennung und Abschaltung eines Lastkreises erfolgt daher vorzugsweise temperaturabhängig, und zwar gemäß einer bevorzugten Ausführungsform über eine vorbestimmte Abhängigkeit zwischen der anzuwendenden Stromobergrenze und der ermittelten Umgebungstemperatur.

Gemäß einer weiter vorteilhaften Ausführungsform kann die Steuerung einen Lastkreis 412 auch in Abhängigkeit von einem externen Signal abschalten. Beispielsweise können Störungen in einem Verbraucher eines Lastkreises über separate Sensoren erkannt und die von diesen ausgehenden Gefahr für das Kraftfahrzeug vorzeitig gebannt werden.

In Fig. 3 sind nur beispielhaft ein PTC-Zuheizer 510 und ein dezentraler Stromverteiler 520 als Verbraucher dargestellt. Der dezentrale Stromverteiler 520 kann über eine Mehrzahl von Halbleiterschaltern 525 ebenfalls untergeordnete Lastkreise zu-und abschalten. Diese Lastkreise sind nur beispielhaft. Für den Fachmann ist es selbstverständlich, dass jeder elektrische Verbraucher eines Kraftfahrzeugs über einen solchen Lastkreis 412 direkt, oder indirekt über einen dezentralen Stromverteiler 520, ansteuerbar ist.

In dem elektrischen Stromverteiler 510 ist erfindungsgemäß ein Kondensator 400 hoher Kapazität vorgesehen, der parallel zum Generator 120 und der Batterie 150 geschaltet ist. Der Kondensator 400 besitzt hohe Kapazitätswerte bei geringem Bauvolumen. Für ein Kraftfahrzeug werden vorzugsweise Kapazitäten im Bereich von 450 bis 600 F verwendet. Heutzutage können Doppelschichtkondensatoren sogar Kapazitäten bis zu mehreren tausend F erreichen.

Doppelschichtkondensatoren erreichen eine um ein Vielfaches höhere Energiedichte als Aluminium-Elektrolytkondensatoren und eine mehrfach höhere Leistungsdichte als Bleibatterien. Während in Batterien die elektrische Energie elektrochemisch gespeichert wird, wird die elektrische Energie in einem Kondensator direkt in Form von positiven oder negativen Ladungen auf den Platten des Kondensators gespeichert. Dabei ist keine chemische Reaktion an den Elektrodenoberflächen erforderlich. Solche Doppelschichtkondensatoren, beispielsweise Doppelschichtkondensatoren der Firma EPCOS mit der Bezeichnung "UltraCap" speichern elektrische Energie und geben sie mit hohem Wirkungsgrad wieder ab. Im Unterschied zu Batterien können sie mit sehr hohen Strömen verschleißfrei geladen und entladen werden. Zudem ermöglichen sie eine sichere Funktion auch bei sehr niedrigen Temperaturen und niedrigen Spannungswerten. Sie geben hohe Leistungen verzögerungsfrei und sehr verlustarm bei Entladeströmen mit bis zu 400 A ab.

Durch die Parallelschaltung eines Kondensators 400 mit hoher Kapazität zu dem Generator 120 und der Starterbatterie 51 lassen sich mehrere Vorteile erreichen. Für den Startvorgang ist nicht mehr die Batterie 150 zuständig, sondern der Hochleistungskondensator 400. Der Kondensator 400 wird vor Ausführung des Startvorgangs von der Batterie 150 aufgeladen. Anschließend gibt der Kondensator 400 die gespeicherte Energie an den Starter 110 ab. Der Startvorgang kann damit sicherer ausgestaltet werden, da der Kondensator in der Lage ist, hohe Energiemengen auch kurzzeitig bei niedrigen Temperaturen abzugeben. Im Gegensatz dazu haben herkömmliche Kraftfahrzeuge bei niedrigen Temperaturen häufig Startprobleme, da die in der Batterie 150 ablaufenden chemischen Reaktionen keine großen Ströme zulassen.

Gemäß einer besonders vorteilhaften Ausführungsform der Erfindung lässt sich das Startverhalten weiter verbessern, indem ohne Erhöhung der Kapazität des Kondensators die in ihm gespeicherte Energie erhöht wird. Zu diesem Zweck wird erfindungsgemäß zur Vorbereitung eines Startvorgangs ein Spannungswandler 310 zwischen die Batterie 150 und den Kondensator 400 geschaltet. Der Spannungswandler 310 setzt die von der Batterie gelieferte Spannung 150 in eine höhere Spannung um. Damit kann der Kondensator bei gleicher Kapazität eine sehr viel größere Energiemenge aufnehmen. Die in dem Kondensator gespeicherte Energiemenge lässt sich gemäß der nachfolgenden Gleichung bestimmen:

$$E = 1/2 \cdot C \cdot U^2.$$

Gleichzeitig ist parallel zu dem Spannungswandler 310 in die elektrische Verbindung zwischen der Batterie 150 und dem Kondensator 400 ein Unterbrecher 320 geschaltet. Der Unterbrecher trennt die direkte elektrische Verbindung zwischen der Batterie und dem Kondensator auf, so dass dem Kondensator eine sehr viel höhere Spannung zugeführt werden kann.

Durch die erfindungsgemäße Vorrichtung 300 mit einem Spannungswandler und einem Unterbrecher kann die für einen Startvorgang zur Verfügung stehende Energie in einfacher Weise deutlich erhöht werden. Ein sicheres Starten des Kraftfahrzeugs ist dann auch bei schwacher Batterie mit nur noch geringen Energiereserven weiterhin möglich.

Nachfolgend wird beispielhaft ein Startvorgang beschrieben, bei dem der erfindungsgemäße Spannungswandler verwendet wird.

Bei Stillstand des Kraftfahrzeugs, d.h. Motor und Zündung sind ausgeschaltet, ist der Spannungswandler (DC/DC-Wandler) 310 ausgeschaltet und die elektrische Verbindung zwischen dem elektrischen Stromverteiler 210 und der Batterie 150 wird durch den Schalter 320 hergestellt. Der Kondensator 400 ist damit parallel zur Batterie 150 geschaltet und auf die Batteriespannung $U_{BATT}$ aufgeladen. Bei herkömmlichen Bordnetzen auf eine Spannung von etwa 12,5 V, bei zukünftigen Bordnetzen auf etwa 42 V.

Vor dem Startvorgang des Verbrennungsmotors wird der Spannungswandler 310 aktiviert und gleichzeitig der Schalter 320 geöffnet. Vorzugsweise werden, wenn erforderlich, über den elektronischen Stromverteiler 210 einzelne Lastkreise abgeschaltet. Insbesondere werden solche Lastkreise 412 abgeschaltet, die einen hohen Strombedarf besitzen. Die Abschaltung kann gemäß einer besonderen Ausführungsform über die Steuerung 440 auch in Abhängigkeit von der Höhe der Batteriespannung vorgenommen werden, um bei schwacher Batterie ein sicheres Starten zu gewährleisten.

Der Spannungswandler erzeugt nun eine Ausgangsspannung, die an den Kondensator angelegt ist, wobei die Ausgangsspannung oberhalb der Batteriespannung liegt. Bei einer Batteriespannung von 12,5 V beträgt die erhöhte Ausgangsspannung beispielsweise 16 V. Die Spannung liegt damit um 3,5 V oberhalb der Batteriespannung und lädt den Kondensator entsprechend höher auf. Damit ist auch die in dem Kondenstor gespeicherte Energie um etwa 60 % höher als bei einer herkömmlichen Ladespannung von 12,5 V.

Damit stehen auch bei einer schwachen Batterie mit einer Batteriespannung die unterhalb von 12,5 V liegt, ausreichend Energiereserven für den Startvorgang zur Verfügung. Wenn der Spannungswandler den Kondensator 400 immer mit einer Spannung von 16 V auflädt, steht für den Startvorgang immer die gleiche Energiemenge zur Verfügung, unabhängig von der Leistungsfähigkeit der Batterie.

Der durch den Spannungswandler erzielte Vorteil lässt sich entweder in erhöhte Energiereserven für den Startvorgang umsetzen oder zur Reduzierung der Kapazität des Kondensators. Bei gleicher gespeicherter Energiemenge ist dann eine geringe Kapazität des Kondensators 400 für einen sicheren Startvorgang ausreichend.

Eine weitere Erhöhung der Energiemenge im Kondensator 400 lässt sich durch eine weitere Erhöhung der Ladespannung höher als 16 V in herkömmlichen Bordnetzen erreichen. Eine Beschränkung auf eine Ladespannung von 16 V besitzt den Vorteil, dass diese Erhöhung keine weiteren Komplikationen mit anderen elektrischen Komponenten des Bordnetzes nach sich zieht. Heutzutage sind alle elektrischen und elektronischen Komponenten eines Kraftfahrzeug-Bordnetzes auf eine Betriebsspannung von maximal 16 V ausgelegt. Die Ladespannung des Kondensators 400 ist daher vorzugsweise an der Auslegung der elektrischen Komponenten des Bordnetzes und der Spannungsfestigkeit des Kondensators selbst orientiert. Bei zukünftigen Bordnetzen mit einer Systemspannung von 42 V lässt sich der Kondensator auf eine deutlich höhere Spannung aufladen, soweit eine kurzzeitige Spannungserhöhung von den anderen elektrischen Komponenten ohne Probleme verkraftet wird.

Alternativ kann bei besonders hohen Ausgangsspannungen des Spannungswandlers kann über ein Abschalten aller Lastkreise bzw. Verbraucher über die Halbleiterschalter 410 jede Komplikation mit anderen Bordnetz-Komponenten ausgeschlossen und ein besonderes sicherer Startvorgang realisiert werden.

Die Aufladung des Kondensators erfolgt rechtzeitig vor Beginn des Startvorgangs. Zur Einleitung des Aufladevorgangs des Kondensators 400 können mehrere Auslöser herangezogen werden. Beispielsweise kann der Fahrer die Aufladung starten, wenn der Zündschlüssel eingesteckt wird oder das Zündschloss in die Stellung "Zündung EIN" gebracht wird. Alternativ kann der Aufladevorgang durch Öffnen einer Fahrzeugtür ausgelöst werden. Dabei kann das Öffnen einer beliebigen Fahrzeugtür als auch das Öffnen der Fahrer-Fahrzeugtür erfasst und als Auslösesignal für die Aufladung verwendet werden. Wenn die Fahrzeugtür als auslösendes Ereignis für den Beginn des Aufladevorgangs verwendet wird, steht mehr Zeit als bei Erfassung der Zündschlüsselstellung zur Verfügung.

Mit der Zündschlüsselstellung "Starten" wird der Spannungswandler ausgeschaltet. Solange der Startvorgang läuft, bleibt der Unterbrecher 320 geöffnet. Sobald der Verbrennungsmotor selbsttätig läuft, wird der Unterbrecher 320 geschlossen und das Bordnetz wieder auf eine Spannung von ca. 12, 5 V gesetzt.

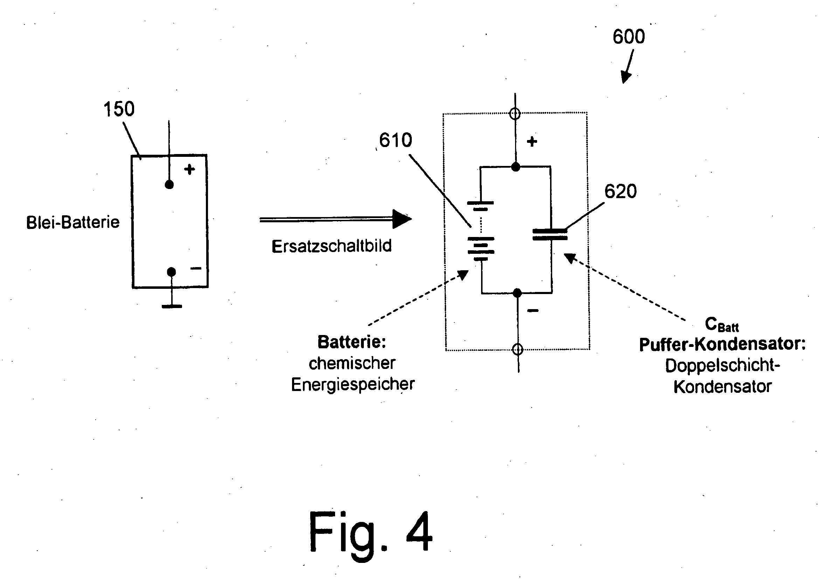

Der Kondensator 400 ermöglicht nicht nur eine Verbesserung des Startvorgangs, sondern kann außerdem die Pufferwirkung der herkömmlichen Batterie 150 übernehmen. Ein Ersatzschaltbild einer herkömmlichen Batterie 150 ist in Fig. 4 dargestellt.

Das Ersatzschaltbild 600 der Batterie 150 zeigt, dass die Batterie nicht nur die Funktion eines chemischen Energiespeichers 610, sondern auch die Funktion eines Pufferkondensator 620 besitzt. Diese Kondensatorwirkung ergibt sich aus dem inneren Aufbau der Bleibatterie.

Die Kondensatorwirkung einer herkömmlichen Batterie wird bisher dazu verwendet, vom Generator 120 herrührende Spannungsschwankungen zu glätten.

Der Generator 120 erzeugt bei laufendem Kraftfahrzeugmotor einen Drehstrom, der mit Hilfe von Dioden gleichgerichtet wird. In heutigen Kraftfahrzeugbordnetzen ist die Batterie 150 räumlich so angeordnet, dass sie zwischen dem Generator 150 und den Verbrauchern in den Lastkreisen 412 liegt. Vor allem wird aus der Kombination der Batteriekapazität $C_{Batt}$ und dem Zuleitungswiderstand der elektrischen Verbindungsleitung zwischen dem Generator 120 und der Batterie 150 $R_{Zul1}$ ein Tiefpass gebildet. Der Tiefpass bewirkt eine Glättung der Spannungsschwankungen des vom Generator erzeugten Stroms.

Erfindungsgemäß wird diese Funktion von dem Kondensator 400 mit hoher Kapazität übernommen.

Während herkömmliche Bordnetze so ausgebildet sind, dass auf den elektrischen Verbindungsleitungen zwischen Generator und Batterie hohe Ströme zum Ausgleich der Spannungsschwankungen fließen können, wird erfindungsgemäß die Funktion der Energiespeicherung und Energiepufferung von getrennten Baueinheiten in dem Kraftfahrzeug-Bordnetz wahrgenommen. Während der Kondensator 400 die Pufferung von Spannungsschwankungen übernimmt, stellt die Batterie 150 die Energie für den Startvorgang bereit. Damit lässt sich die Batterie in einfacher Weise entfernt von dem Generator und dem Stromverteiler positionieren, ohne dass der herkömmliche Aufwand für eine elektrische Leitungsverbindung 240 mit der Batterie erforderlich ist. Im Gegenteil, die Querschnitte können, wie beispielhaft im Zusammenhang mit Fig. 2 beschrieben, auf deutlich kleinere Werte reduziert werden. Damit werden Kraftfahrzeugbordnetze leichter und preisgünstiger.

Die Pufferfunktion wird durch die Anordnungsfolge Generator - Batterie - Stromverteiler - Verbraucher in Verbindung mit dem sich einstellenden Tiefpaß erreicht. Der Tiefpaß wird aus dem Zuleitungswiderstand $R_{Zul1}$ zwischen dem Generator und der Batterie einerseits und der Kapazität $C_{Batt}$ der Batterie andererseits gebildet. Ein geringerer Leitungsquerschnitt bewirkt zudem einen höheren Zuleitungswiderstand $R_{Zul1}$ und verbessert damit die Tiefpasswirkung aufgrund der Gleichung für die Zeitkonstante Tau des Tiefpasses:

$$Tau = R_{Zul1} \cdot C_{Batt}$$

Zusammenfassend hat das erfindungsgemäße neue Kraftfahrzeug-Bordnetz eine Vielzahl von Vorteilen gegenüber herkömmlichen Bordnetzen. Die Starterbatterie übernimmt nicht mehr die Startfunktion, ist einer geringeren Impuls- und Strombelastung ausgesetzt, muss nur noch reduzierte Anforderungen hinsichtlich des Tieftemperaturverhaltens erfüllen und kann eine Batterie mit reduzierter Speicherkapazität sein. Mit Hilfe eines Spannungswandlers lässt sich die Energie und damit die Startsicherheit erhöhen. Die Leitungen weisen nur noch einen geringeren Querschnitt auf, so dass Kosten und Gewichtsvorteile erzielt werden, insbesondere bei der Anordnung der Batterie im Heck des Kraftfahrzeugs.

**Patentansprüche**

1. Kraftfahrzeug-Bordnetz mit einem Generator (120), einer Batterie (150), einem Starter (110), einem Kondensator (400) hoher Kapazität zur Speicherung elektrischer Energie für den Startvorgang eines Kraftfahrzeugmotors, einem Spannungswandler (310) und einem Unterbrecher (320), wobei der Spannungswandler (310) und der Unterbrecher (320) in Parallelschaltung in der Verbindung zwischen dem Kondensator (400) und der Batterie (150) angeordnet sind,
**dadurch gekennzeichnet, dass**
das Kraftfahrzeug-Bordnetz außerdem eine Steuereinheit (440) umfasst, die den Spannungswandler (310) und den Unterbrecher (320) zur Vorbereitung eines Startvorgangs des Kraftfahrzeugmotors steuert, um für eine kurze Zeit vor Beginn des Startvorgangs eine Aktivierung des Spannungswandlers (310) zur Umsetzung der Spannung (UBatt) der Batterie (150) in eine höhere Spannung und eine Auftrennung der direkten elektrischen Verbindung zwischen der Batterie (150) und dem Kondensator (400) durch Öffnung des Unterbrechers (320) zur Ladung des Kondensators (400) zu bewirken.

2. Kraftfahrzeug-Bordnetz nach Anspruch 1, wobei die Spannung (UBatt) der Batterie (150) im geladenen Zustand im Bereich von etwa 12,5 V liegt und der Spannungswandler (310) die Spannung (UBatt) der Batterie (150) um mehrere Volt auf vorzugsweise etwa 16 V erhöht.

3. Kraftfahrzeug-Bordnetz nach Anspruch 2, wobei die Steuereinheit (440) in Abhängigkeit von der Erfassung eines geöffneten Zustandes einer Fahrzeugtür den Spannungswandler (310) aktiviert und den Unterbrecher (320) öffnet.

4. Kraftfahrzeug-Bordnetz nach Anspruch 3, wobei die Steuereinheit (440) mit einem Sensor zur Erfassung des Offen/Geschlossen-Zustandes der Fahrertür verbunden ist.

5. Kraftfahrzeug-Bordnetz nach einem der Ansprüche 3 oder 4, wobei die Steuereinheit (440) in Abhängigkeit von der Erfassung der Stellung des Zündschlüssels den Spannungswandler (310) aktiviert und den Unterbrecher (320) öffnet.

6. Kraftfahrzeug-Bordnetz nach Anspruch 5, wobei die Steuereinheit (440) bei der Erfassung der Zündschlüsselstellung "Zündung EIN" den Spannungswandler (310) aktiviert und den Unterbrecher (320) öffnet.

7. Kraftfahrzeug-Bordnetz nach einem der Ansprüche 3 bis 6, wobei die Steuereinheit (440) den Spannungswandler (310) bei geöffnetem Unterbrecher (320) deaktiviert, sobald der Startvorgang des Kraftfahrzeugmotors eingeleitet wird.

8. Kraftfahrzeug-Bordnetz nach einem der Ansprüche 3 bis 7, wobei die Steuereinheit (440) den Unterbrecher (320) schließt, sobald der Startvorgang erfolgreich beendet wurde.

9. Kraftfahrzeug-Bordnetz nach Anspruch 8, wobei die Steuereinheit (440) die Spannung des Generators (120) überwacht und den Unterbrecher (320) in Abhängigkeit von der Höhe der Spannung des Generators (120) schließt.

10. Verfahren zum Starten eine Kraftfahrzeugmotors mit einem Kraftfahrzeug-Bordnetz, das einen Generator (120), eine Batterie (150), einen Starter (110) und einen Kondensator (400) hoher Kapazität zur Speicherung elektrischer Energie für den Startvorgang des Kraftfahrzeugmotors umfaßt, mit den Schritten:

   Erfassen eines kurz bevorstehenden Startvorgangs, bei dem der Kraftfahrzeugmotor mit Hilfe des Starters (110) in Betrieb gesetzt wird,

   Auftrennen einer direkten elektrischen Verbindung zwischen der Batterie (150) und dem Kondensator (400) hoher Kapazität und

   Aufladen des Kondensators (400) hoher Kapazität, wobei die Spannung (UBatt) der Batterie (150) über einen Spannungswandler (310) in eine höhere Spannung umgesetzt wird, und Versorgen des Starters (110) zum Starten des Kraftfahrzeugmotors mit Energie aus dem Kondensator (400) hoher Kapazität.

11. Verfahren nach Anspruch 10, wobei zur Erfassung eines kurz bevorstehenden Startvorgangs ein geöffneter Zustand einer Fahrzeugtür erfaßt wird.

12. Verfahren nach Anspruch 11, wobei ein geöffneter Zustand der Fahrertür erfasst wird.

13. Verfahren nach einem der Ansprüche 10 bis 12, wobei zur Erfassung eines kurz bevorstehenden Startvorgangs ein die Stellung des Zündschlüssels erfasst wird.

14. Verfahren nach Anspruch 13, wobei die Zündschlüsselstellung "Zündung EIN" erfasst wird.

15. Verfahren nach einem der Ansprüche 10 bis 14, wobei das Umsetzten der Spannung (UBatt) der Batterie (150) auf einen höheren Wert beendet wird, sobald der Starter (110) aktiviert wird.

16. Verfahren nach einem der Ansprüche 10 bis 15, wobei die Batterie (150) elektrisch mit dem Generator verbunden wird, sobald der Kraftfahrzeugmotor aus eigener Kraft läuft.

17. Verfahren nach Anspruch 16, wobei in Abhängigkeit von der Höhe der Spannung des Generators (120) festgestellt wird, ob der Kraftfahrzeugmotor aus eigener Kraft läuft.

## Claims

1. A motor vehicle electrical system, comprising a generator (120), a battery (150), a starter (110), a high-capacity capacitor (400) for storing electric energy for the starting process of a motor vehicle engine, a voltage transformer (310) and an interrupter (320), wherein the voltage transformer (310) and the interrupter (320) are connected in parallel between the capacitor (400) and the battery (150),
   **characterized in that**
   the motor vehicle electrical system further comprising a control unit (440) which controls the voltage transformer (310) and the interrupter (320) for preparing a starting process of the motor vehicle engine to effect for a short time prior to the start of the starting process an activation of the voltage transformer (310) for transforming the voltage ($U_{Batt}$) of the battery (150) into a larger voltage and an opening of the direct electrical connection between the battery (150) and the capacitor (400) by opening of the interrupter (320) for charging the capacitor (400).

2. A motor vehicle electrical system according to claim 1, wherein the voltage ($U_{Batt}$) of the battery (150) in a charged state is within the range of approximately 12.5 V and the voltage transformer (310) increases the voltage ($U_{Batt}$) of the battery (150) by several volts to preferably approximately 16 V.

3. A motor vehicle electrical system according to claim 2, wherein the control unit (440) activates the voltage transformer (310) and opens the interrupter (320) in dependence on the detection of an open state of a vehicle door.

4. A motor vehicle electrical system according to claim 3, wherein the control unit (440) is connected to a sensor for detecting the open/closed state of the vehicle door.

5. A motor vehicle electrical system according to claim 3 or 4, wherein the control unit (440) activates the voltage transformer (310) and opens the interrupter (320) in dependence on the detection of the position of the ignition key.

**6.** A motor vehicle electrical system according to claim 5, wherein the control unit (440) activates the voltage transformer (310) and opens the interrupter (320) upon the detection of the ignition key position "ignition ON".

**7.** A motor vehicle electrical system according to any of claims 3 to 6, wherein the control unit (440) deactivates the voltage transformer (310) while the interrupter (320) is open, as soon as the starting process of the motor vehicle engine is initiated.

**8.** A motor vehicle electrical system according to any of claims 3 to 7, wherein the control unit (440) closes the interrupter (320) as soon as the starting process was successfully terminated.

**9.** A motor vehicle electrical system according to claim 8, wherein the control unit (440) monitors the voltage of the generator (120) and closes the interrupter (320) in dependence on the voltage level of the generator (120).

**10.** A method for starting a motor vehicle engine with a motor vehicle electrical system, comprising a generator (120), a battery (150), a starter (110) and a high-capacity capacitor (400) for storing electric energy for the starting process of the motor vehicle engine, comprising the steps:

detecting an imminent starting process during which the motor vehicle engine is put into operation by means of the starter (110),
opening of a direct electrical connection between the battery (150) and the high-capacity capacitor (400), and
charging the high-capacitor (400) wherein the voltage ($U_{Batt}$) of the battery (150) is transformed by a voltage transformer (310) into a higher voltage, and
supplying the starter (110) with energy from the high-capacity capacitor (400) for starting the motor vehicle engine.

**11.** A method according to claim 10, wherein an open state of a vehicle door is detected for detecting an imminent starting process.

**12.** A method according to claim 11, wherein an open state of the driver's door is detected.

**13.** A method according to any of claims 10 to 12, wherein the position of the ignition key is detected for detecting an imminent starting process.

**14.** A method according to claim 13, wherein the ignition key position "ignition ON" is detected.

**15.** A method according to one of claims 10 to 14, wherein the transformation of the voltage ($U_{Batt}$) of the battery (150) to a higher value is terminated as soon as the starter (110) is activated.

**16.** A method according to any of claims 10 to 15, wherein the battery (150) is electrically connected to the generator as soon as the motor vehicle engine runs by itself.

**17.** A method according to claim 16, wherein it is detected in dependence on the voltage level of the generator (120) whether the motor vehicle engine runs by itself.

## Revendications

**1.** Réseau de bord de véhicule automobile avec un alternateur (120), une batterie (150), un démarreur (110), un condensateur (400) de capacité élevée pour le stockage d'énergie électrique destinée au démarrage d'un moteur de véhicule automobile, un transformateur de tension (310) et un rupteur (320), dans lequel le transformateur de tension (310) et le rupteur (320) sont montés en parallèle dans la connexion entre le condensateur (400) et la batterie (150),
**caractérisé en ce que**
le réseau de bord de véhicule automobile comporte par ailleurs, un bloc de commande (440) qui pilote le transformateur de tension (310) et le rupteur (320) pour préparer le démarrage du moteur du véhicule automobile, afin de provoquer un court temps avant le début du démarrage, une activation du transformateur de tension (310) pour convertir la tension ($U_{Batt}$) de la batterie (150) en une tension supérieure et l'ouverture d'une connexion électrique entre la batterie (150) et le condensateur (400) par l'ouverture du rupteur (320) pour charger le condensateur (400).

**2.** Réseau de bord de véhicule automobile selon la revendication 1, dans lequel la tension ($U_{Batt}$) de la batterie (150) se situe dans la plage des 12,5 V à l'état chargé et le transformateur de tension (310) augmente la tension ($U_{Batt}$) de la batterie (150) de plusieurs Volts, pour l'amener de préférence à environ 16 V.

**3.** Réseau de bord de véhicule automobile selon la revendication 2, dans lequel le bloc de commande (440) active le transformateur de tension (310) et ouvre le rupteur (320), en fonction de la détection d'un état ouvert d'une porte de véhicule automobile.

**4.** Réseau de bord de véhicule automobile selon la revendication 3, dans lequel le bloc de commande (440) est relié à un capteur pour détecter l'état ouvert/fermé de la porte du conducteur.

5. Réseau de bord de véhicule automobile selon l'une quelconque des revendications 3 ou 4, dans lequel le bloc de commande (440) active le transformateur de tension (310) et ouvre le rupteur (320), en fonction de la détection de la position de la clé de contact.

6. Réseau de bord de véhicule automobile selon la revendication 5, dans lequel le bloc de commande (440) active le transformateur de tension (310) et ouvre le rupteur (320), en cas de détection de la position "Contact MARCHE" de la clé de contact.

7. Réseau de bord de véhicule automobile selon l'une quelconque des revendications 3 à 6, dans lequel le bloc de commande (440) désactive la transformateur de tension (310) en ouvrant le rupteur (320), dès que le démarrage du moteur du véhicule automobile a été initié.

8. Réseau de bord de véhicule automobile selon l'une quelconque des revendications 3 à 7, dans lequel le bloc de commande (440) ferme le rupteur (320), dès que le démarrage est terminé correctement.

9. Réseau de bord de véhicule automobile selon la revendication 8, dans lequel le bloc de commande (440) surveille la tension de l'alternateur (120) et ferme le rupteur (320), en fonction de la valeur de la tension de l'alternateur (120).

10. Procédé de démarrage d'un moteur de véhicule automobile avec un réseau de bord de véhicule automobile, qui comprend un alternateur (120), une batterie (150), un démarreur (110) et un condensateur (400) de capacité élevée pour le stockage d'énergie électrique destinée au démarrage du moteur de véhicule automobile, aves les étapes suivantes:

   détection d'un démarrage imminent par lequel le moteur du véhicule automobile est mis en marche à l'aide du démarreur (110),
   l'ouverture d'une connexion électrique directe entre la batterie (150) et le condensateur (400) de capacité élevée et
   chargement du condensateur (400) de capacité élevée, dans lequel la tension ($U_{Batt}$) de la batterie (150) est convertie en une tension plus élevée, au moyen d'un transformateur de tension (310) et
   alimentation du démarreur (110) pour démarrer le moteur du véhicule automobile, avec l'énergie extraite du condensateur (400) de capacité élevée.

11. Procédé selon la revendication 10, dans lequel l'état ouvert de la porte du véhicule est détecté pour déceler un démarrage imminent.

12. Procédé selon la revendication 11, dans lequel l'état ouvert de la porte du contucteur est détecté.

13. Procédé selon l'une quelconque des revendications 10 à 12, dans lequel la position de la clé de contact est détectée pour déceler un démarrage imminent.

14. Procédé selon la revendication 13, dans lequel la position "Contact MARCHE" est détectée.

15. Procédé selon l'une quelconque des revendications 10 à 14, dans lequel la conversion de tension ($U_{Batt}$) de la batterie (150) à une valeur supérieure est arrêtée dès que le démarreur (110) est active.

16. Procédé selon l'une quelconque des revendications 10 à 15, dans lequel la batterie (150) est reliée électiquement à l'alternateur, dès que le moteur du véhicule automobile marche de manière autonome.

17. Procédé selon la revendication 16, dans lequel on determine en function de la valeur de la tension de l'alternateur (120) si le moteur du véhicule automobile marche de manière autonome.

S - Starter
G - Generator

130

Stromverteil-
Punkt

160

verschiedene
Laststromkreise

$R_{Zul1}$

140

$R_{Zul2}$

110

120

150

Batterie

100

# Fig. 1

Fig. 2

Fig. 3

Motorraum

zw. Spritzwand
und Innenraum

Heck

PTC-
Zuheizer — 510

Bus

„Elektronischer"
Stromverteiler — 210

412

Dezentr.
Stromverteiler — 520

420

410

Lastkreise

S

Lastkreise

525

110

400

320

SDC/DC

150

ISense

DC

UBatt

UC

DC — 310

240

430

415

G

Steuerung

DC/DC-Wandler

120

440

Bus

300

Starter-Batterie

EP 1 564 862 B2

13

600

620

C$_{Batt}$
**Puffer-Kondensator:**
Doppelschicht-
Kondensator

610

Ersatzschaltbild

**Batterie:**
chemischer
Energiespeicher

150

Blei-Batterie

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02066293 A
- US 6325035 B
- US 6481406 B